# EUROPEAN PATENT APPLICATION

(11) **EP 2 413 560 A1**
(43) Date of publication of application: **01.02.2012**
(21) Application number: 10290425.7
(22) Date of filing: 29.07.2010
(51) Int. Cl.: H04L 29/06, H04W 12/08

(54) **Method to control cellphone communications**

(71) Applicant: Alcatel Lucent, 75007 Paris (FR)
(72) Inventor: Legrand, Patrick, 91620 Nozay (FR); Durecu, Olivier, 91620 Nozay (FR)
(74) Representative: Sogan, Gloria

(57) **Abstract**

The present invention refers to a method to control at least one connection functionality of a cellphone attached to a femto base station wherein the said femto base station comprises a control module configured to authorize at least one connection functionality of the attached cellphone according to a predefmed schedule.

## Description

### BACKGROUND OF THE INVENTION

The present invention relates to the field of cellphone communications and more particularly to cellphone communications control.

With the development and the democratization of cellphones, anybody has access to a plurality of communication means. However, such a trend also involves some drawbacks such as the uncontrolled use of cellphones by kids, notably at home and during night hours. In order to limit such excesses, parents have only a few possibilities such as a credit-limited cellphone package that limits the amount of communications on a monthly basis.

It is therefore necessary to provide a technical solution allowing control of cellphone communications in relation to day and time.

### SUMMARY OF THE INVENTION

The purpose is to overcome the aforementioned drawbacks of the state of the art and offer a method allowing control of cellphone communications, especially during night hours.

This is achieved by a method to control at least one connection functionality of a cellphone attached to a femto base station wherein the said femto base station comprises a control module configured to authorize at least one connection functionality of the attached cellphone according to a predefined schedule.

According to another aspect, the control module is configured to selectively block the following types of connection functionalities:
- outgoing and incoming calls,
- outgoing and incoming short messages (SMS),
- internet sessions,
and to select an authorization/blocking schedule of the said connection functionalities.

According to a further aspect, the femto base station is configured to produce notifications of the activity of at least one attached cell phone.

According to an additional aspect, the femto base station is configured to send the produced notifications to a cell phone or a computer.

According to another aspect, the femto base station is configured to display the produced notifications.

According to a further aspect, the femto base station is located at home and provides home coverage.

According to an additional aspect, the at least one controlled attached cellphone corresponds to a child cellphone and the method provides parental control of the at least one child's cellphone.

According to a further aspect, a cellphone is configured to get attached to the femto base station when located in the coverage area of the said femto base station.

According to an additional aspect, cellphone settings include an attachment preference function allowing definition of base stations selection criteria in case of an attachment possibility to several base stations, the access to the said attachment preference mode being locked and protected by an access code.

The embodiments of the present invention also refer to a femto base station comprising a control module configured to selectively authorize or block at least one connection functionality of an attached cellphone in relation of a predefined authorization schedule.

According to another aspect, the said femto base station is configured to produce notifications of the attached cellphone activity.

According to a further aspect, the said femto base station is configured to display the produced notifications.

According to an additional aspect, the said femto base station is configured to send the produced notifications to a cellphone or a computer.

The embodiments of the present invention also refer to a cellphone comprising an attachment preference function allowing definition of base stations selection criteria in case of attachment possibility to several base stations.

According to another aspect, the access to the said attachment preference function is locked and protected by an access code.

### BRIEF DESCRIPTION OF THE DRAWINGS

Some embodiments of apparatus and equipment in accordance with embodiments of the present invention are now described, by way of example only, and with reference to the accompanying drawings, in which:
FIG.**1** is an exemplary diagram of a home femto base station and its coverage zone
FIG.**2** is an exemplary diagram of a control module interface to selectively authorize or block a connection functionality of a registered cellphone of a base station in relation of the time and day.

### DETAILED DESCRIPTION OF THE INVENTION

As used herein, the term "femto base station" refers to any small size cell base stations providing local connection such as home or building coverage.

As used herein, the term "connection functionality" of a cellphone refers to a function of cellphone requiring a connection to a base station (providing a connection to the network) such as the exchange of short messages (SMS), the transmission or reception of calls, chat and video chat functions or Internet access functions...

The embodiments of the present invention refer to the use of a femto base station and the configuration of the said femto base station in order to control the connection functionalities of the cellphones attached to said femto base station.

Femto base stations are increasingly deployed, generally for private use, in order to provide a local connection. Such a local connection allows on the one hand decreasing the connection expenses for the users of the femto base station and on the other hand reducing traffic of the macrocell base station, which is particularly interesting for network providers.

Thus, femto base stations are used at home for home coverage, in small companies for buildings coverage or any small area locations such as hotels or restaurants for example.

Due to the previously cited advantages, attachment to a femto base station is generally selected as a first choice by the cellphone.

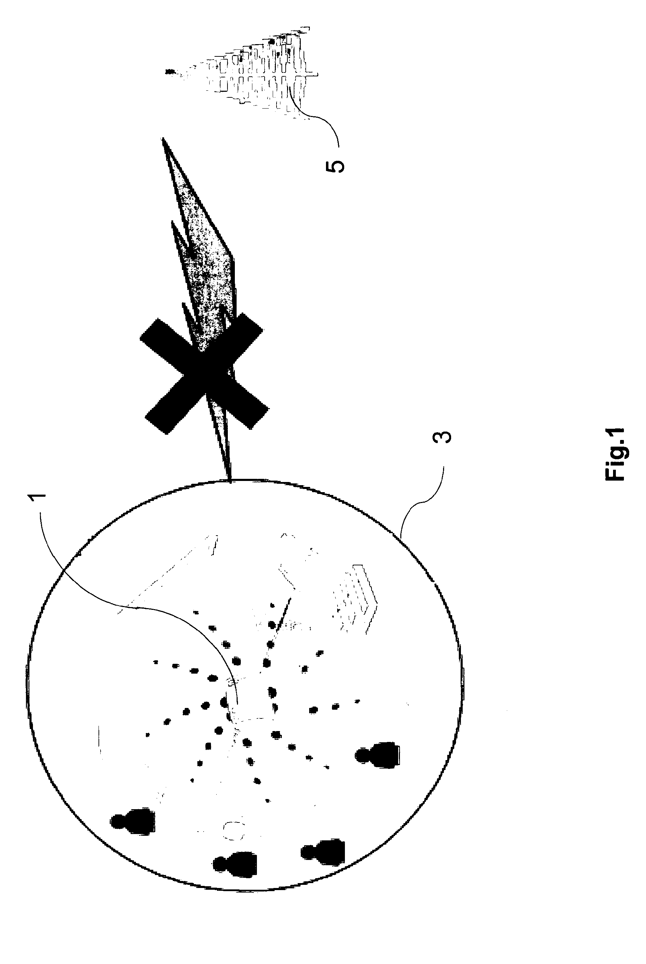

Thus, in the case of a home femto base station as represented in Fig.1, any authorized cellphones or devices requiring a connection is automatically attached to the femto base station 1 when entering the coverage zone 3 of the said femto base station 1 (even if connections to other endpoints, macro-cell base stations for example, are available). (Here, the said authorization corresponds to registered cellphones, for example the cellphones of the members of a family living at home). As a consequence, authorized users are "trapped" in the femto cell 3 and cannot get connection from other base stations 5 so that control of their communications or connections may be achieved by the femto base station 1.

In order to control cellphone communications, it is necessary therefore to configure a control module of the femto base station 1 that selectively authorizes or blocks one or several connection functionalities of an attached cellphone.

By configuring the said control module, parents may then control the communications of their children. Such a control module is already implemented in the femto base stations 1 of the state of the art to define users' equipments authorized to get attachment to the femto base station 1. The idea of the embodiments of the present invention is therefore to develop additional functions for this control module such as an authorization schedule to define access to connection functionalities based on time.

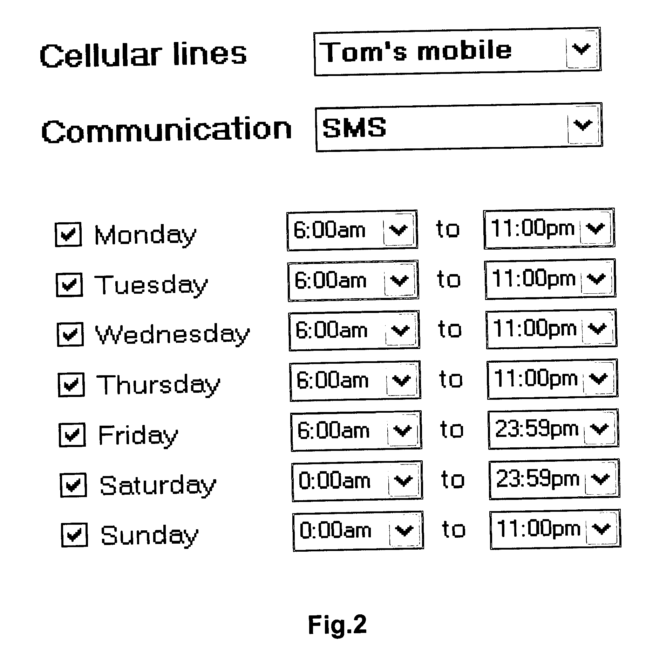

According to an embodiment of the present invention, such control of the connection functionalities is achieved on a time and day basis as presented in Fig.2. For any registered device, a schedule of the access to a connection functionality (SMS in the present example) is selected.

Then, parents may define time periods (time and day) when their child (Tom in the present case) has access to the selected connection functionality.

Besides, in order to prevent children from getting connections to another base station, the attachment preference rule is defined in the cellphone attachment preference function, the said function being locked by a password in order for the parents to define an attachment preference to the home femto base station 1 when the child is in the coverage area 3. As a consequence, the child cannot modify the settings (as he/she does not know the password) in order to get connected to another base station 5.

According to another aspect of the invention, parents may also want to be aware of the communications of their child when connection to the femto base station 1 is authorized.

Thus, according to another embodiment, notifications are created when a connection functionality is used by a cellphone attached to the femto base station. For example, if the child sends a short message or gives a call, the control module creates a notification including selected information about the connection functionality (message sending time or call duration...). Different configurations are then possible for the parents to get access to the created notification.

In a first configuration, notifications are registered and displayed on a screen of the femto base station. Parents are then aware of the communications of their child by looking at the femto base station screen.

In another configuration, a message (short message or electronic message) is sent to the cellphone or the computer of at least one parent for each notification or a report of all the notifications is sent at a predetermined time (once a day for example) for all the notifications occurred since the last report.

Thus, according to embodiments of the present invention, parents can control the cellphone communications of their children when they are at home and in particular during night time and can be aware of the use of the cellphone by their children by a simple configuration of the femto base station located at home. Embodiments of the present invention may also be used in a professional context such as in hotels where connection functionalities access may be adjusted to meet the customers' needs.

## Claims

1. Method to control at least one connection functionality of a cellphone attached to a femto base station (1) wherein the said femto base station (1) comprises a control module configured to authorize at least one connection functionality of the attached cellphone according to a predefined schedule.

2. Method to control at least one connection functionality in accordance with claim 1 wherein the control module is configured to selectively block the following types of connection functionalities:
- outgoing and incoming calls,
- outgoing and incoming short messages (SMS),
- internet sessions,
and to select an authorization/blocking schedule of said connection functionalities.

3. Method to control at least one connection functionality in accordance with claim 1 or 2 wherein the femto base station (1) is configured to produce notifications of the activity of at least one attached cell phone.

4. Method to control at least one connection functionality in accordance with claim 3 wherein the femto base station (1) is configured to send the produced notifications to a cell phone or a computer.

5. Method to control at least one connection functionality in accordance with claim 3 wherein the femto base station (1) is configured to display the produced notifications.

6. Method to control at least one connection functionality in accordance with one of the previous claims wherein the femto base station (1) is located at home and provides home coverage (3).

7. Method to control at least one connection functionality in accordance with claim 6 wherein the at least one controlled attached cellphone corresponds to a child's cellphone and wherein the method provides parental control of the at least one child cellphone.

8. Method to control at least one connection functionality in accordance with one of the previous claims wherein a cellphone is configured to get attached to the femto base station (1) when located in the coverage area (3) of the said femto base station (1).

9. Method to control at least one connection functionality in accordance with claim 8 wherein cellphone settings comprise an attachment preference function allowing definition of base stations selection criteria in case of an attachment possibility to several base stations, the access to the said attachment preference mode being locked and protected by an access code.

10. Femto base station (1) comprising a control module configured to selectively authorize or block at least one connection functionality of an attached cellphone in function of a predefined authorization schedule.

11. Femto base station (1) in accordance with claim 10 wherein the said femto base station (1) is configured to produce notifications of the attached cellphone activity.

12. Femto base station (1) in accordance with claim 11 wherein the said femto base station (1) is configured to display the produced notifications.

13. Femto base station in accordance with claim 11 wherein the said femto base station (1) is configured to send the produced notifications to a cellphone or a computer.

14. Cellphone comprising an attachment preference function allowing definition of base stations selection criteria in case of attachment possibility to several base stations.

15. Cellphone in accordance with claim 14 wherein the access to said attachment preference function is locked and protected by an access code.

## Amended claims

### Amended claims in accordance with Rule 137(2) EPC.

**1.** Method to control at least one connection functionality of a cellphone attached to a femto base station (1) wherein the said femto base station (1) comprises a control module configured to authorize at least one connection functionality of the attached cellphone according to a predefined schedule and wherein a cellphone is configured to get attached to the femto base station when located in the coverage area of the said femto base station.

**2.** Method to control at least one connection functionality in accordance with claim 1 wherein the control module is configured to selectively block the following types of connection functionalities:
- outgoing and incoming calls,
- outgoing and incoming short messages (SMS),
- internet sessions,
and to select an authorization/blocking schedule of said connection functionalities.

**3.** Method to control at least one connection functionality in accordance with claim 1 or 2 wherein the femto base station (1) is configured to produce notifications of the activity of at least one attached cell phone.

**4.** Method to control at least one connection functionality in accordance with claim 3 wherein the femto base station (1) is configured to send the produced notifications to a cell phone or a computer.

**5.** Method to control at least one connection functionality in accordance with claim 3 wherein the femto base station (1) is configured to display the produced notifications.

**6.** Method to control at least one connection functionality in accordance with one of the previous claims wherein the femto base station (1) is located at home and provides home coverage (3).

**7.** Method to control at least one connection functionality in accordance with claim 6 wherein the at least one controlled attached cellphone corresponds to a child's cellphone and wherein the method provides parental control of the at least one child cellphone.

**8.** Method to control at least one connection functionality in accordance with one of the previous claims wherein cellphone settings comprise an attachment preference function allowing definition of base stations selection criteria in case of an attachment possibility to several base stations, the access to the said attachment preference mode being locked and protected by an access code.

**9.** Equipment comprising a femto base station (1) comprising a control module configured to selectively authorize or block at least one connection functionality of an attached cellphone in function of a predefined authorization schedule and a cellphone comprising an attachment preference function allowing definition of base stations selection criteria in case of attachment possibility to several base stations.

**10.** Equipment in accordance with claim 9 wherein the said femto base station (1) is configured to produce notifications of the attached cellphone activity.

**11.** Equipment in accordance with claim 10 wherein the said femto base station (1) is configured to display the produced notifications.

**12.** Equipment in accordance with claim 10 wherein the said femto base station (1) is configured to send the produced notifications to a cellphone or a computer.

**13.** Equipment in accordance with claim 9wherein the access to the attachment preference function of the cellphone is locked and protected by an access code.
